(19) Europäisches Patentamt
European Patent Office
Office européen des brevets

(11) **EP 2 595 144 B1**

(12) **EUROPEAN PATENT SPECIFICATION**

(45) Date of publication and mention
of the grant of the patent:
**03.02.2016 Bulletin 2016/05**

(51) Int Cl.:
**G06F 17/30** (2006.01)    **G10L 15/02** (2006.01)
**G10L 15/08** (2006.01)

(21) Application number: **12193055.6**

(22) Date of filing: **16.11.2012**

(54) **Voice data retrieval system and program product therefor**

Sprachdatenabrufsystem und Programmprodukt dafür

Système d'extraction de données vocales et produit de programme destiné à cet effet

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **18.11.2011 JP 2011252425**

(43) Date of publication of application:
**22.05.2013 Bulletin 2013/21**

(73) Proprietor: **Hitachi, Ltd.**
**Tokyo 100-8280 (JP)**

(72) Inventor: **Kanda, Naoyuki**
**Tokyo, 100-8220 (JP)**

(74) Representative: **MERH-IP Matias Erny Reichl
Hoffmann
Patentanwälte PartG mbB
Paul-Heyse-Strasse 29
80336 München (DE)**

(56) References cited:
**JP-A- 2005 038 014      JP-A- 2005 257 954
US-A1- 2003 187 649      US-A1- 2009 132 251**

- HATTORI KOTA ET AL: "English /r/-/l/ category assimilation by Japanese adults: Individual differences and the link to identification accuracy", THE JOURNAL OF THE ACOUSTICAL SOCIETY OF AMERICA, AMERICAN INSTITUTE OF PHYSICS FOR THE ACOUSTICAL SOCIETY OF AMERICA, NEW YORK, NY, US, vol. 125, no. 1, 1 January 2009 (2009-01-01), pages 469-479, XP012122996, ISSN: 0001-4966, DOI: 10.1121/1.3021295

- MURAT AKBACAK ET AL: "Spoken Proper Name Retrieval for Limited Resource Languages Using Multilingual Hybrid Representations", IEEE TRANSACTIONS ON AUDIO, SPEECH AND LANGUAGE PROCESSING, IEEE SERVICE CENTER, NEW YORK, NY, USA, vol. 18, no. 6, 1 August 2010 (2010-08-01) , pages 1486-1495, XP011329214, ISSN: 1558-7916, DOI: 10.1109/TASL.2009.2035785

**Description**

FIELD OF THE INVENTION

The present invention relates to a system of retrieving voice data.

BACKGROUND OF THE INVENTION

A large amount of voice data has been accumulated in accordance with mass storage formation of a storage device in recent years. In a number of voice databases of background arts, information of time at which voice is recorded is imparted in order to manage voice data, and a desired voice data is retrieved based on the information. However, in the retrieval based on the time information, it is necessary to previously know the time at which the desired voice is spoken, which is not suitable for a use of retrieving voice in which a specific keyword is included in speech. In a case of retrieving the voice in which the specific keyword is included in the speech, it is necessary to listen to the voice from start to end.

Hence, there has been developed a technology of automatically detecting time at which a specific keyword in a voice database is spoken. According to a sub-word retrieving method which is one of representative methods, first, a voice data is converted into a sub-word sequence by sub-word recognition. Here, a sub-word is a technical term indicating a unit which is smaller than a unit of a word such as a phoneme or syllable. When a keyword is inputted, there is detected time at which the keyword is spoken in a voice data by comparing a sub-word expression of the keyword and a result of a sub-word recognition of the voice data and detecting a portion at which a degree of agreement of the sub-word and the voice data is high (Japanese Unexamined Patent Application Publication No.2002-221984, Kohei Iwata, et al. "Verification of Effectiveness of New Sub-word Model and Sub-word Acoustic Distance in Vocabulary Free Acoustic Document Retrieving Method", Information Processing Society of Japan Journal, Vol.48, No.5, 2007). According to a word spotting method shown in Tatsuya Kawahara, Toshihiko Munetsugu, Shuji Dooshita, "Word Spotting in Conversation Voice Using Heuristic Language Model", Journal of Information & Communication Research, D-II, Information System, II-Information Processing, Vol.78, No.7, pp. 1013-1020, 1995., there is detected time at which a keyword is spoken in a voice data by creating an acoustic model of the keyword by combining the acoustic model by a unit of a phoneme and checking the corresponding keyword acoustic model and the voice data.

However, any of the above-described technologies undergoes an influence of a variation in speech (provincial accent, a difference in a speaker attribute or the like) or noise, an error is included in a retrieval result, and actually, time at which the keyword is not spoken appears in the retrieval result. Therefore, a user needs to determine whether the keyword has been truly spoken by listening by reproducing a voice data from time of speaking the keyword that is provided by retrieval in order to remove an erroneous retrieval result.

There is also proposed a technology for assisting the correct/incorrect determination described above. There is disclosed a technology of highlighting to reproduce time of detecting the keyword in order to determine whether the keyword is truly spoken by listening in Japanese Unexamined Patent Application Publication No. 2005-38014.

US 2009/0132251 A1 describes a spoken document retrieval system. The system comprises a means for storing a correspondence table between subwords in spoken documents, a means for converting an entered keyword into a sequence of subwords, and a means for obtaining a position, wherein the first subword in the sequence of subwords generated from the keyword is positioned in the spoken document.

US 2003/0187649 A1 describes an electronic document searching system having an expansion module for expanding an input as a function of an acoustic similarity or frequency of word sequence occurrence. Said expanding results in alternative input words and the alternative input words are returned for further processing.

SUMMARY OF THE INVENTION

There is disclosed the technology of highlighting to reproduce time of detecting the keyword in order to determine whether the keyword is truly spoken by listening in Japanese Unexamined Patent Application Publication No. 2005-38014.

However, there poses a problem that difficulty is accompanied in carrying out the correct/incorrect determination as described above by listening frequently under a situation in which a language of a voice data by which a user configures a retrieval object cannot sufficiently be understood. For example, as a result of carrying out retrieval by a keyword of "play" by a user, there is a case where time at which "pray" is spoken is actually detected. In this case, there is a possibility that a Japanese user who does not sufficiently understand English determines "pray" as "play". The above-described problem cannot be resolved by the technology of highlighting to reproduce the position of detecting the keyword as is proposed in Japanese Unexamined Patent Application Publication No.2005-38014,

It is an object of the present invention to be able to easily carry out correct/incorrect determination of a retrieval result in a voice data retrieval system by resolving the problem.

The object is achieved by the present invention according to the independent claims. Further preferred developments are described in the dependent claims.

The present invention adopts a configuration that is described in, for example, the scope of claim(s) in order to resolve the above-described problem.

As an example of a voice data retrieval system according to the present invention, there is provided a voice data retrieval system including an inputting device of inputting a keyword, a phoneme converting unit of converting the inputted keyword in a phoneme expression, a voice data retrieving unit of retrieving a portion of a voice data at which the keyword is spoken based on the keyword in the phoneme expression, a comparison keyword creating unit of creating a set of comparison keywords separately from the keyword having a possibility of a confusion of a user in listening to the keyword based on the keyword in the phoneme expression, and a retrieval result presenting unit of presenting a retrieval result from the voice data retrieving unit and the comparison keyword from the comparison keyword creating unit to the user.

When an example of a program product of the present invention is pointed out, there is provided a computer readable medium storing a program causing a computer to execute a process for functioning as a data retrieval system, the process including the steps of converting an inputted keyword in a phoneme expression, retrieving a portion of a voice data at which the keyword is spoken based on the keyword in the phoneme expression, creating a set of comparison keywords separately from the keyword having a possibility of a confusion of a user in listening to the keyword based on the keyword in the phoneme expression, and presenting a retrieval result and the comparison keyword to the user.

According to the present invention, in the voice data retrieval system, a determination of correct/incorrect of the retrieval result can easily be carried out by creating the comparison keyword set having the possibility of the confusion of the user in listening to the keyword based on the keyword inputted by the user to present to the user.

BRIEF DESCRIPTION OF THE DRAWINGS

Fig. 1 is a block diagram showing a configuration of a computer system to which the present invention is applied;
Fig. 2 is a diagram of arranging constituent elements of the present invention in accordance with a flow of processing;
Fig. 3 is a flowchart showing the flow of the processing of the present invention;
Fig. 4 is a flowchart showing a flow of processing of creating a comparison keyword candidate;
Fig. 5 is a diagram showing an example of a word dictionary;
Fig. 6 is a diagram showing an example of a phoneme confusion matrix;
Fig. 7 is a flowchart showing a flow of processing of checking a comparison keyword candidate;
Fig. 8 is a diagram showing an example of a screen of presenting information to a user;
Fig. 9 is a diagram showing other example of a phoneme confusion matrix;
Fig. 10 is a diagram showing an example of a procedure of calculating an edit distance;
Fig. 11 is a diagram showing other example of a procedure of calculating the edit distance;
Fig. 12 is a diagram showing an example of phoneme confusion matrix in a case where a user can understand plural languages; and
Fig. 13 is a diagram showing a pseudo-code of an edit distance calculation.

DETAILED DESCRIPTION OF THE PREFERRED EMBODIMENTS

An explanation will be given of an embodiment of the present invention in reference to attached drawings.

First Embodiment

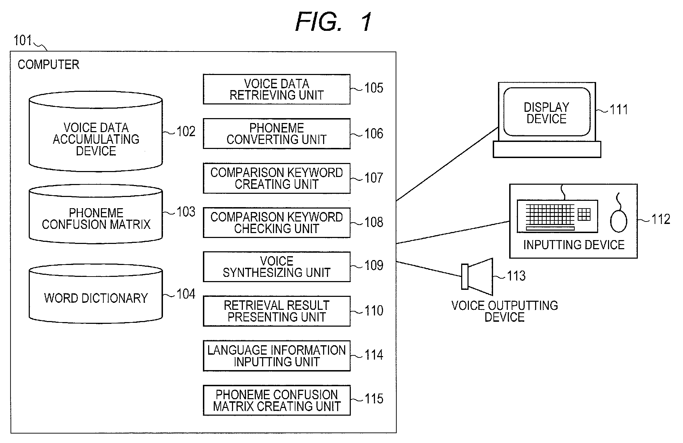

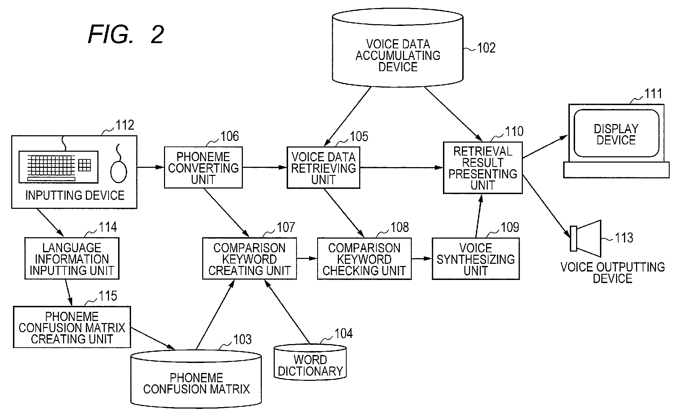

Fig. 1 is a block diagram showing a first embodiment and showing a configuration of a computer system to which the present invention is applied. Fig. 2 is a diagram arranging constituent elements of Fig. 1 in accordance with a flow of processing. A computer system of the present embodiment is configured by a computer 101, a display device 111, an inputting device 112, and a voice outputting device 113. Inside of the computer 101 includes a voice data accumulating device 102, a phoneme confusion matrix, and a word dictionary, and includes a voice retrieving unit 105, a phoneme converting unit 106, a comparison keyword creating unit 107, a comparison keyword checking unit 108, a voice synthesizing unit 109, a retrieval result presenting unit 110, a language information inputting unit 114, and a phoneme confusion matrix creating unit 115.

A voice data retrieval system can be realized by loading a prescribed program onto a memory by CPU, and executing the prescribed program loaded onto the memory by CPU in a computer. The prescribed program may be loaded directly onto the memory by inputting the prescribed program from a storage medium stored with the program via a reading device, or from a network via a communication device, or may be loaded onto the memory after storing the prescribed program once to an external storage device, although not illustrated.

The present invention of a program product according to the present invention is a program product which is integrated to a computer in this way and operating the computer as a voice data retrieval system. A voice data retrieval system shown in the block diagrams of Fig. 1 and Fig. 2 is configured by integrating the program product of the present invention to the computer.

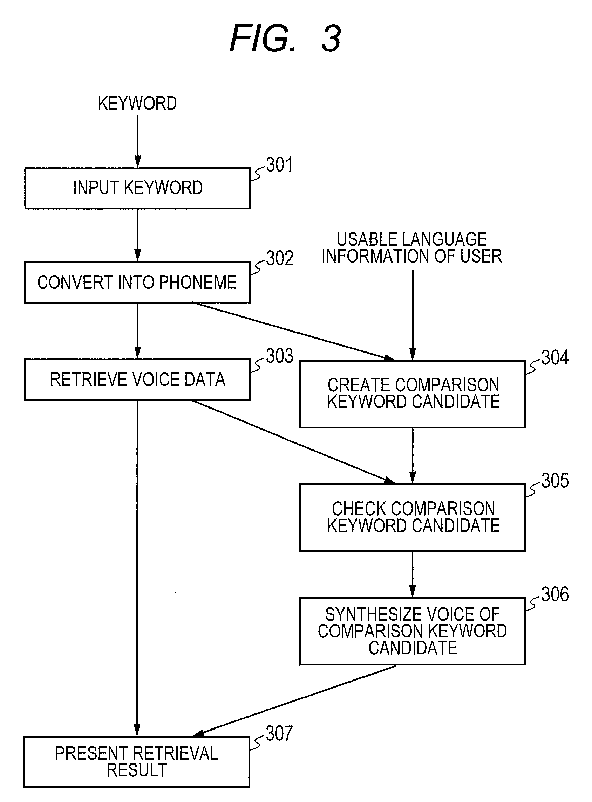

A description will be given as follows of a flow of processing of respective constituent elements. Fig. 3 shows a flowchart of processing.

[Keyword input and conversion to phoneme expression]

When a user inputs a keyword from the inputting device 112 (processing 301) in text, first, the phoneme converting unit 106 converts the keyword in a phoneme expression (processing 302). For example, in a case where the user inputs a keyword of "play" as an input, "play" is converted into "plel". The conversion is known as a morpheme analyzing processing, which is well known for the skilled person, and therefore, an explanation thereof will be omitted.

A keyword can also be inputted by speaking the keyword to a microphone by voice of a user by using the microphone as an inputting device. In this case, a voice waveform can be converted into a phoneme expression by utilizing a speech recognition technology as a phoneme converting unit.

[Voice data retrieval]

Successively, the voice data retrieving unit 105 detects time at which the keyword is spoken in voice data accumulated in the voice data accumulating device 102 (processing 303). In the processing, there can be used a word spotting processing presented in, for example, Tatsuya Kawahara, Toshihiko Munetsugu, Shuji Dooshita, "Word Spotting in Conversation Voice Using Heuristic Language Model", Journal of Information & Communication Research, D-II, Information · System, II-Information Processing, Vol.78, No.7, pp.1013-1020, 1995. Or, there can also be used a method of previously pretreating a voice data accumulating device as in Japanese Unexamined Patent Application Publication No.2002-221984, Kohei Iwata, et al. "Verification of Effectiveness of New Sub-word Model and Sub-word Acoustic Distance in Vocabulary Free Acoustic Document Retrieving Method", Information Processing Society of Japan Journal, Vol.48, No.5, 2007 or the like. An enterprise person may select any of the means.

[Creation of comparison keyword candidate]

Successively, the comparison keyword creating unit 107 creates a comparison keyword set having a possibility of being confused in listening by a user (processing 304). In the following explanation, a keyword is inputted in English; on the other hand, a user speaks Japanese as a native language. However, a language of a keyword and a language of a user are not limited to English and Japanese, and any combination of languages will do.

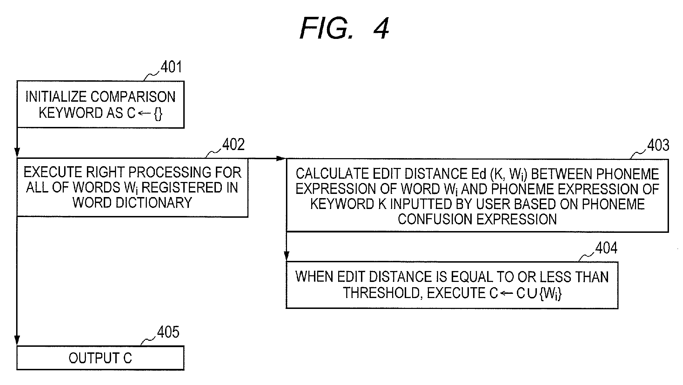

Fig. 4 shows a flow of processing. First, a comparison keyword set C is initialized as an empty set (processing 401). Successively, with regard to all of words $W_i$ which are registered in an English word dictionary, there are calculated edit distances Ed ($K$, $W_i$) between phoneme expressions of the words $W_i$ and a phoneme expression of a keyword K that is inputted by a user (processing 403). When the edit distance for the word $W_i$ is equal to or less than a threshold, the corresponding word is added to the comparison keyword set C (processing 404). Finally, the comparison keyword set C is outputted.

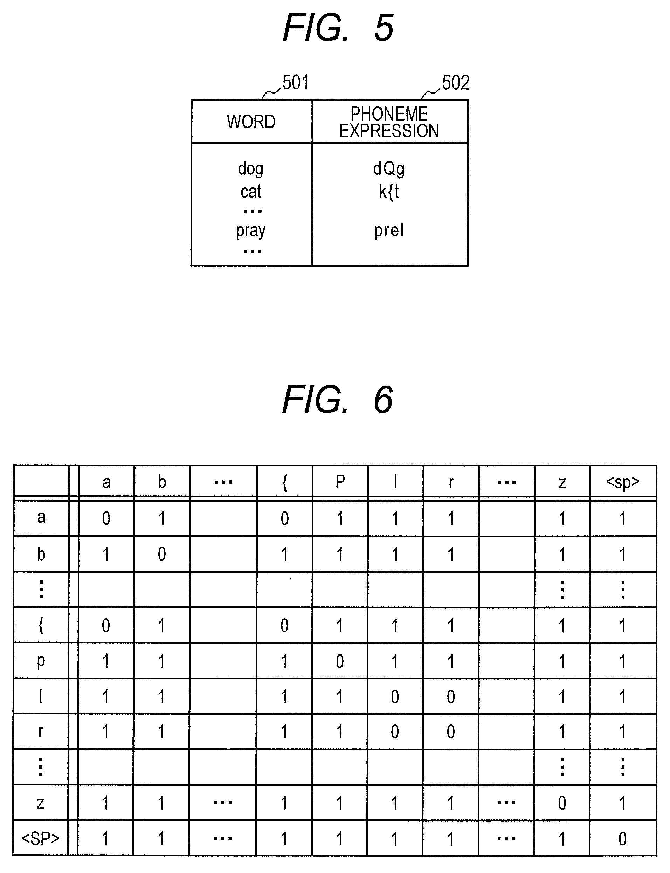

Fig. 5 shows an example of a word dictionary. As shown in Fig. 5, the word dictionary is described with a number of sets of words 501 and phoneme expressions of the words 502.

Fig. 6 shows an example of a phoneme confusion matrix for Japanese speaker. According to the phoneme confusion matrix, in a case where a phoneme shown in a vertical column is easy to be confused by a phoneme shown in a horizontal column, a value near to 0 is described, and in a case where the phoneme shown in the vertical column is difficult to be confused by the

phoneme shown in the horizontal column, a value near to 1 is described both by numerical values from 0 to 1. However, notation SP designates a special notation expressing "silence". For example, a phoneme b is difficult to be confused by a phoneme a, and therefore, 1 is assigned in the phoneme confusion matrix. In contrast thereto, a phoneme 1 and a phoneme r are phonemes which are easy to be confused by each other for a user having a native language of Japanese, and therefore, a value of 0 is assigned in the phoneme confusion matrix. In a case where phonemes are the same as each other, 0 is always assigned. One phoneme confusion matrix is prepared for each native language of a user. In the following, in a phoneme confusion matrix, a value assigned to a row of phoneme X and a column of phoneme Y is expressed as Matrix (X, Y).

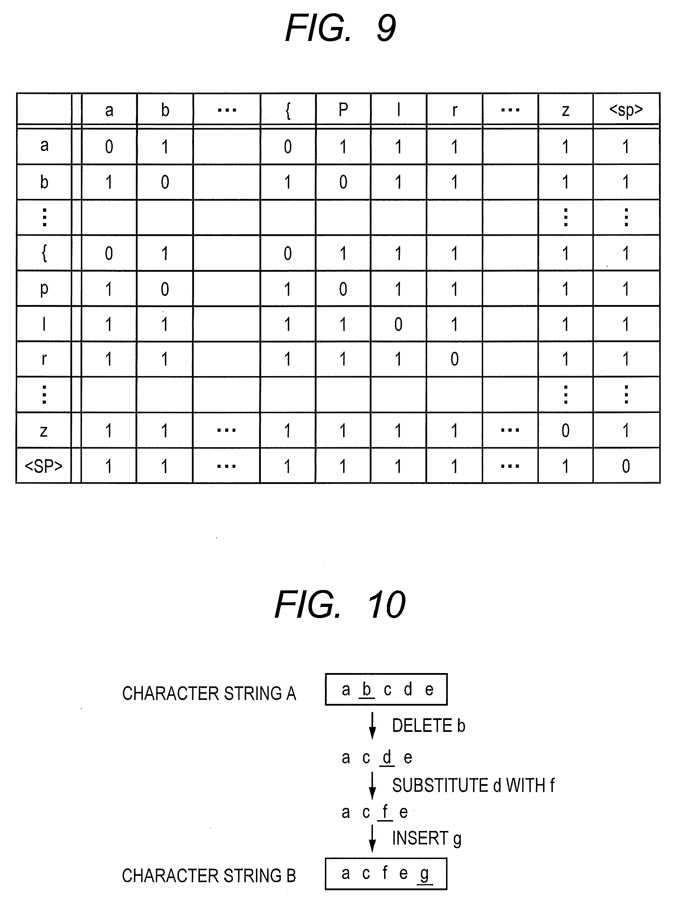

An edit distance defines a distance scale between a certain character string A and a character string B, and is defined as a minimum operation cost for converting the character string A into the character string B by subjecting the character string A to respective operations of substitution, insertion, and deletion. For example, when the character string A is abcde and the character string B is acfeg as shown in Fig. 10, the character string A can be converted into the character string B by first, deleting b at a second character of the character string A, substituting d at a fourth character of the character string A for f, and adding g to a tail end of the character string A. Here, costs taken for the substitution, the insertion, and the deletion are respectively defined, and an edit distance Ed (A, B) is made to be a sum of operation costs when operations minimizing the sum of the operation costs are selected.

According to the embodiment, a cost taken for inserting a certain phoneme X is made to be Matrix (SP, X), a cost taken for deleting a certain phoneme X is made to be Matrix (X, SP), and a cost of substituting a phoneme X for a phoneme Y is made to be Matrix (X, Y). Thereby, the edit distance which reflects a phoneme confusion matrix can be calculated. For example, consider a case of calculating an edit distance between a phoneme expression "pleI" of a keyword "play" and a phoneme expression "preI" of a word "pray" in accordance with the phoneme confusion matrix of Fig. 6. "pleI" can be converted into "preI" by substituting a second character of "pleI" for r. Here, a value of 0 is assigned to 1 and r in the phoneme confusion matrix of Fig. 6. Therefore, a cost Matrix (l, r) of substituting 1 for r is 0. Therefore, "pleI" can be converted into "preI" at cost of 0. Therefore, an edit distance is calculated as Ed (play, pray) = 0.

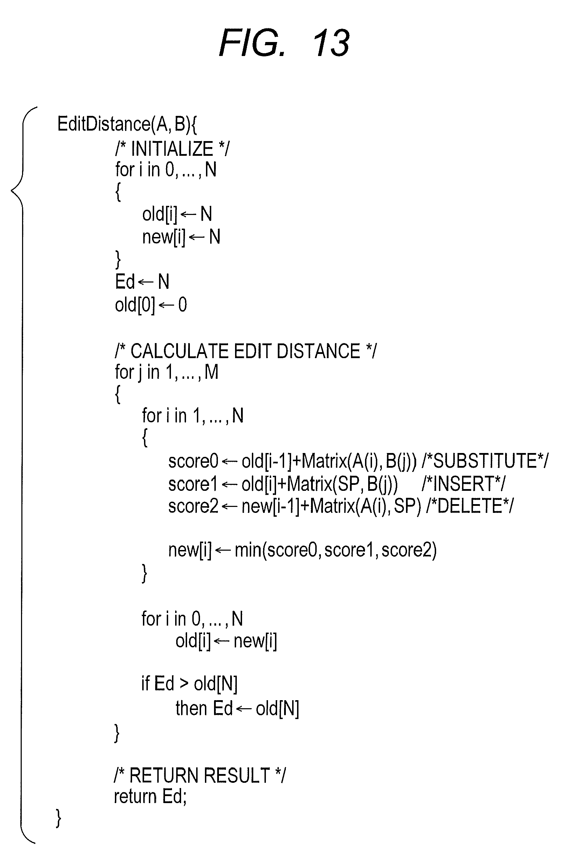

Incidentally, a dynamic programming which is an efficient method of calculating an edit distance is well known for the skilled person, and therefore, only a pseudo-code is shown here. Fig. 13 shows a pseudo-code. Here, a phoneme at an i-th character of a phoneme sequence A is expressed as A (i), and lengths of the phoneme sequence A and a phoneme sequence B are respectively made to be N and M.

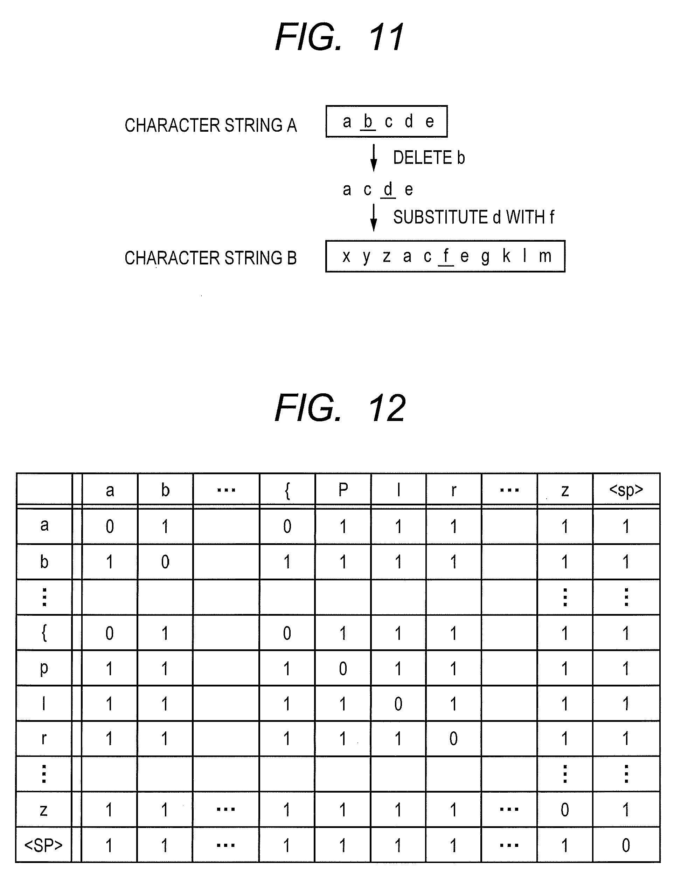

As a definition of an edit distance separately from the above-described, an edit distance can also be defined as a minimum operation cost for including a character string A as operated in a character string B by subjecting the character string A to respective operations of substitution, insertion, and deletion. For example, in a case where a character string A is abcde, and a character string B is xyzacfegklm as shown in Fig. 11, first, b at a second character of the character string A is deleted, successively, a character d at a third character of acde is substituted for f, thereby, the character string acfe as operated is included in the character string B. A sum of operation costs at this occasion is made to be an edit distance Ed (A, B).

In creating a comparison keyword, either of 2 kinds described above may be used as a definition of an edit distance. Any method can be utilized so far as the method is a method of measuring a distance between character strings other than the processes described above.

Not only a word $W_i$ but a word sequence $W_1 ... W_N$ may be used in processes 403 and 404 of Fig. 4.

There can be carried out packaging in which in processing 403, not only an edit distance Ed (K, $W_1...W_N$) but a probability P ($W_1...W_N$) of creating a word sequence $W_1...W_N$ are calculated in processing 403, and in processing 404, when the edit distance is equal to or less than the threshold, and P ($W_1...W_N$) is equal to or more than a threshold, C $\leftarrow$ CU {$W_1...W_N$}. In this case, a comparison keyword set also includes the word sequence. Incidentally, as a method of calculating P ($W_1...W_N$), for example, an N-gram model which is well known in a field of a language processing can be utilized. Details of the N-gram model are well known for the skilled person, and therefore, an explanation thereof will be omitted here.

There can also be utilized an arbitrary scale of combining Ed (K, $W_1...W_N$) and P ($W_1...W_N$) other than the above-described. For example, in processing 404, there can be utilized the scale of Ed (K, $W_1...W_N$)/P ($W_1...W_N$) or (P ($W_1...W_N$)*(length (K) - Ed (K, $W_1...W_N$))/length (K). Incidentally, length (K) is a number of phonemes included in a phoneme expression of keyword K.

[Creation of phoneme confusion matrix]

A phoneme confusion matrix which is used for creating a comparison keyword can be switched by a native language or a usable language of a user. In this case, a user inputs information with regard to a native language or a useable language of the user to a system via the language information inputting unit 114. In the system which receives an input from the user, the phoneme confusion matrix creating unit 115 outputs a phoneme confusion matrix for the native language of the user. For example, although Fig. 6 is for a Japanese speaker, a phoneme confusion matrix as shown in Fig. 9 can be used for a user having a native language of Chinese. For example, in Fig. 9, different from Fig. 6, a point of intersecting a phoneme 1 and a phoneme r is indicated by 1, and there is configured a definition that the two phonemes are difficult to be confused by each other by a user having the native language of Chinese.

The phoneme confusion matrix creating unit is not limited to a native language of a user but can switch a phoneme confusion matrix by information of a language which the user can understand.

In a case where a user can understand plural languages, the phoneme confusion matrix creating unit 115 can also create a phoneme confusion matrix which combines these pieces of the language information. As one of embodiments, for a user who can understand $\alpha$ language and $\beta$ language, there can be created a confusion matrix i row j column element of which is configured by a larger one of i row j column element of a phoneme confusion matrix for an $\alpha$ language

user and i row j column element of a phoneme confusion matrix for a β language user. Also in a case where a user can understand languages of 3 languages or more, there may be selected the largest one of i row j column elements for respective matrix elements in phoneme confusion matrices of respective languages.

For example, for a user who can understand Japanese and Chinese, a phoneme confusion matrix of Fig. 12 is created. In respective elements of the phoneme confusion matrix of Fig. 12, the respective elements are substituted for larger ones of respective matrix elements of the phoneme confusion matrix for a Japanese speaker (Fig. 6) and the phoneme confusion matrix for a Chinese speaker (Fig. 9).

A user can also adjust a value of a phoneme confusion matrix by directly operating the matrix.

Incidentally, creation of a phoneme confusion matrix can be carried out at an arbitrary timing before operating the comparison keyword creating unit.

[Check of comparison keyword candidate]

It is selected whether the corresponding comparison keyword is to be presented to a user for comparison keyword candidates that are created by the comparison keyword creating unit 107 by operating the comparison keyword checking unit 108. An unnecessary comparison keyword candidate is removed thereby.

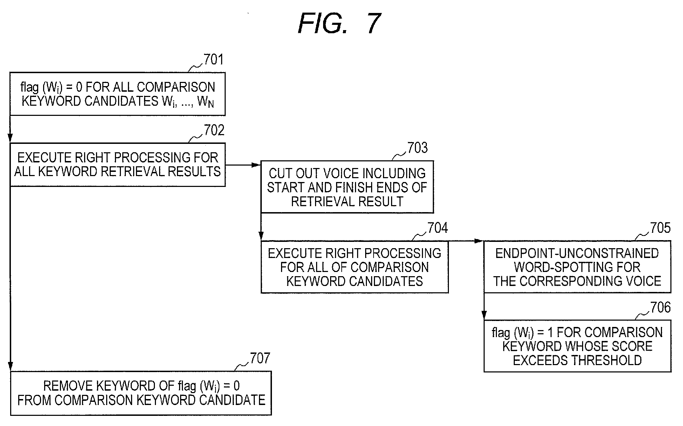

Fig. 7 shows a flow of the processing.

(1) First, execute flag $(W_i)$ = 0 with regard to all of comparison keyword candidates $W_i$ (i = 1, ..., N) created by the comparison keyword creating unit 107 (processing 701).
(2) Successively, execute processes of (i) through (iii) as follows for all of candidates of time of speaking a keyword provided from the voice data retrieving unit.

(i) Cut out voice X including start and finish ends of time of speaking the keyword (processing 703).
(ii) Execute a word spotting processing for the voice with regard to all of comparison keyword candidates $W_i$ (i = 1, ..., N) (processing 705).
(iii) Execute flag $(W_i)$ = 1 for a word $W_i$ in which score $P^*(W_i^*|X)$ provided as a result of the word spotting exceeds a threshold (processing 706).

(3) Remove a keyword in which flag $(W_i)$ is 0 from the comparison keyword candidates (processing 707).

Incidentally, in the word spotting processing, there is calculated a probability P (*key*|X) for speaking a keyword $W_i$ in voice X in accordance with Equation 1.

Equation 1

$$P(*key*\mid X) \cong \max_{h_0} P(X\mid h_0)P(h_0)/(\max_{h_1} P(X\mid h_1)P(h_1))$$

Here, notation $h_0$ designates an element which includes a phoneme expression of the keyword in an arbitrary phoneme set, and notation $h_1$ designates an element of an arbitrary phoneme sequence set. Details thereof are shown in Tatsuya Kawahara, Toshihiko Munetsugu, Shuji Dooshita, "Word Spotting in Conversation Voice Using Heuristic Language Model", Journal of Information & Communication Research, D-II, Information · System, II-Information Processing, Vol.78, No.7, pp.1013-1020, 1995 or the like, the details are well known for the skilled person, and therefore, here, a further explanation thereof will be omitted.

In a case where a value P (*W*|X) of the word spotting which is calculated in checking a comparison keyword exceeds a threshold, the corresponding retrieval result can also be removed from a retrieval result.

Incidentally, a processing of checking a comparison keyword candidate may be omitted.

[Voice synthesizing processing]

Both of the voice comparison keyword candidate and the keyword inputted by the user are converted into voice waveforms by the voice synthesizing unit 109. Here, a voice synthesizing technology of converting a text into a voice waveform is well known for the skilled person, and therefore, details thereof will be omitted.

[Presentation of retrieval result]

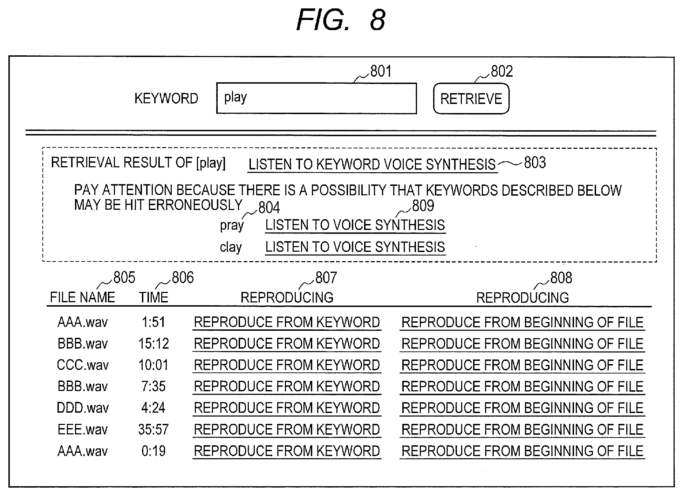

Finally, the retrieval result presenting unit 110 presents information with regard to a retrieval result and a comparison keyword to a user via the display device 111 and the voice outputting device 113. Fig. 8 shows an example of a screen displayed on the display device 111 at this occasion.

A user can retrieve a portion at which the keyword is spoken in a voice date accumulated in the voice data accumulating device 102 by inputting a retrieval keyword to a retrieval window 801 and pressing down a button 802. In an example of Fig. 8, a user retrieves a portion at which a keyword of "play" is spoken in a voice data accumulated in the voice data accumulating device 102.

The retrieval result is a voice file name 805 in which the keyword inputted by the user is spoken and time 806 at which the keyword is spoken in the voice file, and voice is reproduced via the voice outputting device 113 from the time of the file by clicking a portion of "reproduce from keyword" 807. Also, voice is reproduced by the voice outputting device 113 from the start of the file by clicking a portion of "reproduce from start of file" 808.

A voice synthesis of the keyword is reproduced via the voice outputting device 113 by clicking a portion of "listen to keyword voice synthesis" 803. Thereby, the user can listen to a correct pronunciation of the keyword, which can configure a reference of whether the retrieval result is correct.

As candidates of the comparison keyword, pray and clay are displayed at 804 of Fig. 8, and voice syntheses of pray and clay are reproduced via the voice outputting device 113 by clicking a portion of "listen to voice synthesis" 809. Thereby, a user notices a possibility of erroneously detecting portions at which keywords of "pray" and "clay" are spoken as a retrieval result, and the user can configure a reference when it is determined whether the retrieval result is correct by listening to synthesized voice of the comparison keyword.

**Claims**

1. A voice data retrieval system comprising:

   an inputting device (112) for inputting a keyword;
   a phoneme converting unit (106) for converting the inputted keyword in a phoneme expression;
   a voice data retrieving unit (105) for retrieving a portion of a voice data at which the keyword is spoken based on the keyword in the phoneme expression; and
   a comparison keyword creating unit (107) for creating a set of comparison keywords separately from the keyword having a possibility of a confusion of a user in listening to the keyword based on the keyword in the phoneme expression;
   a language information inputting unit (114) for inputting a piece of information of a language which a user can understand;
   a phoneme confusion matrix creating unit (115) for creating a phoneme confusion matrix for each user based on the piece of information provided from the language information inputting unit (114), wherein the comparison keyword creating unit (107) creates the set of comparison keywords based on the phoneme confusion matrix; and
   a retrieval result presenting unit (110) for presenting a retrieval result from the voice data retrieving unit (105) together with the set of comparison keywords from the comparison keyword creating unit (107) to the user.

2. The voice data retrieval system according to claim 1,
   wherein the comparison keyword creating unit (107) calculates an edit distance between the keyword in the phoneme expression and a phoneme expression of a word registered In a word dictionary, and determines the word having the edit distance equal to or less than a threshold to be the comparison keyword.

3. The voice retrieval system according to any of the preceding claims, further comprising:

   a voice synthesizing unit (109) for synthesizing a voice(s) of either one or both of the keyword inputted by the user and the comparison keyword created by the comparison keyword creating unit (107),
   wherein the retrieval result presenting unit (110) presents a synthesized voice from the voice synthesizing unit (109) to the user.

4. The voice data retrieval system according to at least one of the preceding claims, further comprising:

   a comparison keyword checking unit (108) for removing an unnecessary comparison keyword by comparing a comparison keyword created by the comparison keyword creating unit (107) and the retrieval result of the voice data retrieving unit (105), wherein

   said comparing comprises the steps of

(i) cutting out voice data including start and finish ends from the retrieval result,

(ii) executing a word spotting processing for said voice data with regard to the comparison keywords of the set of comparison keywords, and

(iii) calculating a probability for each comparison keyword for being spoken like said voice data, and

(iv) deleting each comparison keyword which has a value of said probability being lower than a predetermined threshold.

5. The voice data retrieval system according to claim 4,
wherein the comparison keyword checking unit (108) removes voice data from the voice data retrieval result which corresponds to the deleted comparison keyword.

6. A computer readable medium storing a program causing a computer to execute a process for functioning as a voice data retrieval system, the process comprising:

converting an Inputted keyword in a phoneme expression;

retrieving a portion of a voice data at which the keyword is spoken based on the keyword in the phoneme expression; and

creating a set of comparison keywords separately from the keyword having a possibility of a confusion of a user in listening to the keyword based on the keyword in the phoneme expression;

inputting a piece of information of a language which a user can understand;

creating a phoneme confusion matrix based on the piece of information, wherein said set of comparison keywords is created based on said phoneme confusion matrix; and

presenting a retrieval result together with the set of comparison keywords to the user.

7. The computer readable medium according to claim 6 storing the program causing the computer to execute the process for functioning as the voice data retrieval system, the process further comprising:

calculating an edit distance between the keyword in the phoneme expression and a phoneme expression of a word registered in a word dictionary; and

making a word having the edit distance equal to or less than the threshold function as a comparison keyword.

8. The computer readable medium according to claim 6 storing the program causing the computer to execute the process for functioning as the voice data retrieval system, the process further comprising:

synthesizing a voice(s) of either one or both of the keyword inputted by the user and the comparison keyword; and

presenting a synthesized voice to the user.

9. The computer readable medium according to claim 6 storing the program causing the computer to execute the process for functioning as the voice data retrieval system, the process further comprising:

comparing a comparison keyword candidate and a retrieval result,

wherein said comparing comprises the steps of

(i) cutting out voice data including start and finish ends from the retrieval result,

(ii) executing a word spotting processing for said voice data with regard to the comparison keywords of the set of comparison keywords,

(iii) calculating a probability for each comparison keyword for being spoken like said voice data, and

(iv) deleting each comparison keyword which has a value of said probability being lower than a predetermined threshold.

10. The computer readable medium according to claim 9 storing the program causing the computer to execute the process for functioning as the voice data retrieval system, the process further comprising:

removing voice data from the voice data retrieval result which corresponds to the deleted comparison keyword.

**Patentansprüche**

1. Stimmdatenwiedergewinnungssystem, das umfasst:

   eine Eingabevorrichtung (11) zum Eingeben eines Schlüsselwortes;
   eine Phonemumsetzungseinheit (106) zum Umsetzen des eingegebenen Schlüsselwortes in einen Phonemausdruck;
   eine Stimmdatenwiedergewinnungseinheit (105) zum Wiedergewinnen eines Teils von Stimmdaten, bei denen das Schlüsselwort gesprochen wird, anhand des Schlüsselwortes in dem Phonemausdruck; und
   eine Vergleichsschlüsselworterzeugungseinheit (107) zum Erzeugen einer Gruppe von Vergleichsschlüsselworten getrennt von dem Schlüsselwort mit einer Möglichkeit einer Verwechslung eines Anwenders beim Hören des Schlüsselwortes anhand des Schlüsselwortes in dem Phonemausdruck;
   eine Sprachinformationseingabeeinheit (114) zum Eingeben eines Stücks Informationen einer Sprache, die ein Anwender verstehen kann;
   eine Phonemverwechslungsmatrixerzeugungseinheit (115) zum Erzeugen einer Phonemverwechslungsmatrix für jeden Anwender anhand des von der Sprachinformationseingabeeinheit (114) gelieferten Stücks Informationen, wobei die Vergleichsschlüsselworterzeugungseinheit (107) die Gruppe von Vergleichsschlüsselworten anhand der Phonemverwechslungsmatrix erzeugt; und
   eine Wiedergewinnungsergebnisdarstellungseinheit (110) zum Darstellen eines Wiedergewinnungsergebnisses von der Stimmdatenwiedergewinnungseinheit (105) zusammen mit der Gruppe von Vergleichsschlüsselworten von der Vergleichsschlüsselworterzeugungseinheit (107) für den Anwender.

2. Stimmdatenwiedergewinnungssystem nach Anspruch 1,
   wobei die Vergleichsschlüsselworterzeugungseinheit (107) einen Editierabstand zwischen dem Schlüsselwort in dem Phonemausdruck und einem Phonemausdruck eines Wortes, das in einem Wörterbuch gespeichert ist, berechnet und bestimmt, dass das Wort, das einen Editierabstand besitzt, der gleich oder kleiner als ein Schwellenwert ist, das Vergleichsschlüsselwort ist.

3. Stimmwiedergewinnungssystem nach einem der vorhergehenden Ansprüche, das ferner umfasst:

   eine Stimmsynthetisierungseinheit (109) zum Synthetisieren einer Stimme/von Stimmen entweder eines durch den Anwender eingegebenen Schlüsselwortes oder des durch die Vergleichsschlüsselworterzeugungseinheit (107) erzeugten Vergleichsschlüsselwortes oder beider,
   wobei die Wiedergewinnungsergebnisdarstellungseinheit (110) dem Anwender eine synthetisierte Stimme von der Stimmsynthetisierungseinheit (109) für darstellt.

4. Stimmdatenwiedergewinnungssystem nach mindestens einem der vorhergehenden Ansprüche, das ferner umfasst:

   eine Vergleichsschlüsselwortüberprüfungseinheit (108) zum Entfernen eines unnötigen Vergleichsschlüsselwortes durch Vergleichen eines durch die Vergleichsschlüsselworterzeugungseinheit (107) erzeugten Vergleichsschlüsselwortes und des Wiedergewinnungsergebnisses der Stimmdatenwiedergewinnungseinheit (105), wobei
   das Vergleichen die Schritte umfasst:

   (i) Ausschneiden von Stimmdaten, die ein Start- und ein Schlussende enthalten, aus dem Wiedergewinnungsergebnis,
   (ii) Ausführen einer Worterkennungsverarbeitung für die Stimmdaten in Bezug auf die Vergleichsschlüsselworte der Gruppe von Vergleichsschlüsselworten und
   (iii) Berechnen einer Wahrscheinlichkeit für jedes Vergleichsschlüsselwort, dass es wie die Stimmdaten gesprochen wird, und
   (iv) Löschen eines jeden Vergleichsschlüsselwortes, das einen Wert der Wahrscheinlichkeit besitzt, der kleiner als ein vorgegebener Schwellenwert ist.

5. Stimmdatenwiedergewinnungssystem nach Anspruch 4,
   wobei die Vergleichsschlüsselwortüberprüfungseinheit (108) Stimmdaten aus dem Stimmdatenwiedergewinnungsergebnis entfernt, die dem gelöschten Vergleichsschlüsselwort entsprechen.

6. Computerlesbares Medium, das ein Programm speichert, das bewirkt, dass ein Computer einen Prozess ausführt, um als ein Stimmdatenwiedergewinnungssystem zu funktionieren, wobei der Prozess umfasst:

Umsetzen eines eingegebenen Schlüsselwortes in einen Phonemausdruck;

Wiedergewinnen eines Teils von Stimmdaten, bei denen das Schlüsselwort gesprochen wird, anhand des Schlüsselwortes in dem Phonemausdruck; und

Erzeugen einer Gruppe von Vergleichsschlüsselworten getrennt von dem Schlüsselwort mit einer Möglichkeit einer Verwechslung eines Anwenders beim Hören des Schlüsselwortes anhand des Schlüsselwortes in dem Phonemausdruck;

Eingeben eines Stücks Informationen einer Sprache, die ein Anwender verstehen kann;

Erzeugen einer Phonemverwechslungsmatrix anhand des Stücks Informationen, wobei die Gruppe von Vergleichsschlüsselworten anhand der Phonemverwechslungsmatrix erzeugt wird; und

Darstellen eines Wiedergewinnungsergebnisses zusammen mit der Gruppe der Vergleichsschlüsselworte für den Anwender.

7. Computerlesbares Medium nach Anspruch 6, das das Programm speichert, das bewirkt, dass der Computer den Prozess ausführt, um als das Stimmdatenwiedergewinnungssystem zu funktionieren, wobei der Prozess ferner umfasst:

Berechnen eines Editierabstands zwischen dem Schlüsselwort in dem Phonemausdruck und einem Phonemausdruck eines Wortes, das in ein Wörterbuch eingetragen ist; und

Herstellen eines Wortes, dass den Editierabstand besitzt, der gleich oder kleiner als die Schwellenfunktion ist, als ein Vergleichsschlüsselwort.

8. Computerlesbares Medium nach Anspruch 6, das das Programm speichert, das bewirkt, dass der Computer den Prozess ausführt, um als das Stimmdatenwiedergewinnungssystem zu funktionieren, wobei der Prozess ferner umfasst:

Synthetisieren einer Stimme/von Stimmen entweder eines durch den Anwender eingegebenen Schlüsselwortes und/oder des Vergleichsschlüsselwortes; und

Darstellen einer synthetisierten Stimme für den Anwender.

9. Computerlesbares Medium nach Anspruch 6, das das Programm speichert, das bewirkt, dass der Computer den Prozess ausführt, um als das Stimmdatenwiedergewinnungssystem zu funktionieren, wobei der Prozess ferner umfasst:

Vergleichen eines Vergleichsschlüsselwortkandidaten und eines Wiedergewinnungsergebnisses, wobei das Vergleichen die Schritte umfasst:

(i) Ausschneiden von Stimmdaten, die ein Start- und eine Schlussende enthalten, aus dem Wiedergewinnungsergebnis,

(ii) Ausführen einer Worterkennungsverarbeitung für die Stimmdaten in Bezug auf die Vergleichsschlüsselworte der Gruppe von Vergleichsschlüsselworten,

(iii) Berechnen einer Wahrscheinlichkeit für jedes Vergleichsschlüsselwort, dass es wie die Stimmdaten gesprochen wird, und

(iv) Löschen eines jeden Vergleichsschlüsselwortes, das einen Wert der Wahrscheinlichkeit besitzt, der kleiner als ein vorgegebener Schwellenwert ist.

10. Computerlesbares Medium nach Anspruch 9, das das Programm speichert, das bewirkt, dass der Computer den Prozess ausführt, um als das Stimmdatenwiedergewinnungssystem zu funktionieren, wobei der Prozess ferner umfasst:

Entfernen der Stimmdaten aus dem Stimmdatenwiedergewinnungsergebnis, das dem gelöschten Vergleichsschlüsselwort entspricht.

**Revendications**

1. Système de récupération de données vocales, comprenant :

un dispositif de saisie (112) pour saisir un mot-clé ;

une unité de conversion de phonèmes (106) pour convertir le mot-clé saisi en une expression phonémique ;

une unité de récupération de données vocales (106) pour récupérer une portion d'une donnée vocale dans laquelle le mot-clé est parlé, en se basant sur le mot-clé dans l'expression phonémique, et

une unité de création de mots-clés de comparaison (107) pour créer un jeu de mots-clés de comparaison séparément du mot-clé ayant une possibilité de confusion d'un utilisateur du mot-clé sur la base du mot-clé dans l'expression phonémique ;

une unité de saisie d'information linguistique (114) pour saisir un morceau d'information d'une langue qu'un utilisateur peut comprendre ;

une unité de création de matrice de confusion phonémique (115) pour créer une matrice de confusion phonémique pour chaque utilisateur sur la base du morceau d'information fourni depuis l'unité de saisie d'information linguistique (114), dans lequel l'unité de création de mots-clés de comparaison (107) crée le jeu de mots-clés de comparaison sur la base de la matrice de confusion phonémique ; et

une unité de présentation de résultats de récupération pour présenter à l'utilisateur un résultat de récupération depuis l'unité de récupération de données vocales (106) ensemble avec le jeu de mots-clés de comparaison depuis l'unité de création de mots-clés de comparaison (107).

2. Système de récupération de données vocales selon la revendication 1,
dans lequel l'unité de création de mots-clés de comparaison (107) calcule une distance d'édition entre le mot-clé dans l'expression phonémique et une expression phonémique d'un mot enregistré dans un dictionnaire de mots, et détermine le mot ayant la distance d'édition égale ou inférieure à un seuil comme étant le mot-clé de comparaison.

3. Système de récupération de données vocales selon l'une quelconque des revendications précédentes, comprenant en outre :

une unité de synthèse vocale (109) pour synthétiser une ou plusieurs voix pour l'un et/ou l'autre du mot-clé saisi par l'utilisateur et du mot-clé de comparaison créé par l'unité de création de mots-clés de comparaison (107), dans lequel l'unité de présentation de résultats de récupération (110) présente à l'utilisateur une voix synthétisée depuis l'unité de synthèse vocale (109).

4. Système de récupération de données vocales selon l'une au moins des revendications précédentes, comprenant en outre une unité de vérification de mots-clés de comparaison (108) pour supprimer un mot-clé de comparaison non nécessaire en comparant un mot-clé de comparaison créé par l'unité de création de mots-clés de comparaison (107) et le résultat de récupération de l'unité de récupération de données vocales (105), dans lequel ladite comparaison comprend les étapes consistant à

(i) recouper des données vocales incluant l'extrémité de départ et l'extrémité de fin depuis le résultat de récupération,

(ii) exécuter un processus de repérage de mots pour lesdites données vocales à l'égard des mots-clés de comparaison ou du jeu de mots-clés de comparaison, et

(iii) calculer une probabilité pour chaque mot-clé de comparaison pour qu'il soit parlé de manière analogue auxdites données vocales, et

(iv) supprimer chaque mot-clé de comparaison qui présente une valeur de probabilité inférieure à un seuil prédéterminé.

5. Système de récupération de données vocales selon la revendication 4,
dans lequel l'unité de vérification de mots-clés de comparaison (108) supprime une donnée vocale depuis le résultat de récupération de données vocales qui correspond au mot-clé de comparaison supprimé.

6. Support lisible à l'ordinateur qui mémorise un programme amenant un ordinateur à exécuter un processus pour qu'il fonctionne comme un système de récupération de données vocales, le processus comprenant les étapes consistant à :

convertir un mot-clé saisi en une expression phonémique ;

récupérer une portion d'une donnée vocale dans laquelle le mot-clé est parlé sur la base du mot-clé dans l'expression phonémique ; et

créer un jeu de mots-clés de comparaison séparément du mot-clé ayant une possibilité de confusion d'un utilisateur lorsqu'il écoute le mot-clé, basée sur le mot-clé dans l'expression phonémique ;

saisir un morceau d'information d'une langue qu'un utilisateur peut comprendre ;

créer une matrice de confusion phonémique sur la base du morceau d'information, dans lequel ledit jeu de mots-clés de comparaison est créé sur la base de ladite matrice de confusion phonémique ; et

présenter à l'utilisateur un résultat de récupération ensemble avec le jeu de mots-clés de comparaison.

7. Support lisible à l'ordinateur selon la revendication 6, qui mémorise le programme amenant l'ordinateur à exécuter le processus pour fonctionner comme système de récupération de données vocales, le processus comprenant en outre les étapes consistant à :

calculer une distance d'édition entre le mot-clé dans l'expression phonémique et une expression phonémique d'un mot enregistré dans un dictionnaire de mots ; et

donner à un mot ayant une distance d'édition égale ou inférieure à un seuil la fonction d'un mot-clé de comparaison.

8. Support lisible à l'ordinateur selon la revendication 6, qui mémorise le programme amenant l'ordinateur à exécuter le processus pour fonctionner comme système de récupération de données vocales, le processus comprenant en outre les étapes consistant à :

synthétiser une ou plusieurs voix pour l'un et/ou l'autre du mot-clé saisi par l'utilisateur et du mot-clé de comparaison ; et

présenter une voix de synthèse à l'utilisateur.

9. Support lisible à l'ordinateur selon la revendication 6, qui mémorise le programme amenant l'ordinateur à exécuter le processus pour fonctionner comme système de récupération de données vocales, le processus comprenant en outre les étapes consistant à :

comparer un candidat de mot-clé de comparaison et un résultat de récupération,

dans lequel ladite comparaison comprend les opérations consistant à

(i) recouper des données vocales incluant l'extrémité de départ et l'extrémité de fin depuis le résultat de récupération,

(ii) exécuter un processus de repérage de mots pour lesdites données vocales à l'égard des mots-clés de comparaison ou du jeu de mots-clés de comparaison, et

(iii) calculer une probabilité pour chaque mot-clé de comparaison pour qu'il soit parlé de manière analogue auxdites données vocales, et

(iv) supprimer chaque mot-clé de comparaison qui présente une valeur de probabilité inférieure à un seuil prédéterminé.

10. Support lisible à l'ordinateur selon la revendication 9, qui mémorise le programme amenant l'ordinateur à exécuter le processus pour fonctionner comme système de récupération de données vocales, le processus comprenant en outre :

l'opération consistant à supprimer des données vocales depuis le résultat de récupération de données vocales qui correspondent au mot-clé de comparaison supprimé.

FIG. 1

COMPUTER 101

VOICE DATA
ACCUMULATING
DEVICE 102

PHONEME
CONFUSION MATRIX 103

WORD DICTIONARY 104

VOICE DATA
RETRIEVING UNIT 105

PHONEME
CONVERTING UNIT 106

COMPARISON KEYWORD
CREATING UNIT 107

COMPARISON KEYWORD
CHECKING UNIT 108

VOICE
SYNTHESIZING UNIT 109

RETRIEVAL RESULT
PRESENTING UNIT 110

LANGUAGE INFORMATION
INPUTTING UNIT 114

PHONEME CONFUSION
MATRIX CREATING UNIT 115

DISPLAY
DEVICE 111

INPUTTING DEVICE 112

VOICE OUTPUTTING
DEVICE 113

*FIG. 2*

# FIG. 3

KEYWORD

↓

| INPUT KEYWORD | 301 |

↓

| CONVERT INTO PHONEME | 302 |

USABLE LANGUAGE
INFORMATION OF USER

↓ ↓

| RETRIEVE VOICE DATA | 303 |    | CREATE COMPARISON KEYWORD CANDIDATE | 304 |

↓

| CHECK COMPARISON KEYWORD CANDIDATE | 305 |

↓

| SYNTHESIZE VOICE OF COMPARISON KEYWORD CANDIDATE | 306 |

↓

| PRESENT RETRIEVAL RESULT | 307 |

*FIG. 4*

401

INITIALIZE COMPARISON
KEYWORD AS C ← {}

402

EXECUTE RIGHT PROCESSING FOR
ALL OF WORDS $W_i$ REGISTERED IN
WORD DICTIONARY

403

CALCULATE EDIT DISTANCE Ed (K, $W_i$) BETWEEN PHONEME
EXPRESSION OF WORD $W_i$ AND PHONEME EXPRESSION OF
KEYWORD K INPUTTED BY USER BASED ON PHONEME
CONFUSION EXPRESSION

404

WHEN EDIT DISTANCE IS EQUAL TO OR LESS THAN
THRESHOLD, EXECUTE C ← C∪{$W_i$}

405

OUTPUT C

# FIG. 5

| WORD | PHONEME EXPRESSION |
|---|---|
| dog | dQg |
| cat | k{t |
| ... | |
| pray | preI |
| ... | |

*501*  *502*

# FIG. 6

| | | a | b | ... | { | P | I | r | ... | z | <sp> |
|---|---|---|---|---|---|---|---|---|---|---|---|
| a | | 0 | 1 | | 0 | 1 | 1 | 1 | | 1 | 1 |
| b | | 1 | 0 | | 1 | 1 | 1 | 1 | | 1 | 1 |
| ⋮ | | | | | | | | | | ⋮ | ⋮ |
| { | | 0 | 1 | | 0 | 1 | 1 | 1 | | 1 | 1 |
| p | | 1 | 1 | | 1 | 0 | 1 | 1 | | 1 | 1 |
| I | | 1 | 1 | | 1 | 1 | 0 | 0 | | 1 | 1 |
| r | | 1 | 1 | | 1 | 1 | 0 | 0 | | 1 | 1 |
| ⋮ | | | | | | | | | | ⋮ | ⋮ |
| z | | 1 | 1 | ... | 1 | 1 | 1 | 1 | ... | 0 | 1 |
| <SP> | | 1 | 1 | ... | 1 | 1 | 1 | 1 | ... | 1 | 0 |

## FIG. 7

flag (W$_i$) = 0 FOR ALL COMPARISON
KEYWORD CANDIDATES W$_i$, ..., W$_N$ —701

EXECUTE RIGHT PROCESSING FOR
ALL KEYWORD RETRIEVAL RESULTS —702

CUT OUT VOICE INCLUDING
START AND FINISH ENDS OF
RETRIEVAL RESULT —703

EXECUTE RIGHT PROCESSING
FOR ALL OF COMPARISON
KEYWORD CANDIDATES —704

ENDPOINT-UNCONSTRAINED
WORD-SPOTTING FOR
THE CORRESPONDING VOICE —705

flag (W$_i$) = 1 FOR COMPARISON
KEYWORD WHOSE SCORE
EXCEEDS THRESHOLD —706

REMOVE KEYWORD OF flag (W$_i$) = 0
FROM COMPARISON KEYWORD CANDIDATE —707

# FIG. 8

|  | |  | |
|---|---|---|---|
| KEYWORD | play _~801_ | | RETRIEVE _~802_ |

RETRIEVAL RESULT OF [play]    LISTEN TO KEYWORD VOICE SYNTHESIS ~803

PAY ATTENTION BECAUSE THERE IS A POSSIBILITY THAT KEYWORDS DESCRIBED BELOW
MAY BE HIT ERRONEOUSLY _~804_                           _~809_
                                pray    LISTEN TO VOICE SYNTHESIS
                                clay    LISTEN TO VOICE SYNTHESIS                `

| FILE NAME _~805_ | TIME _~806_ | REPRODUCING _~807_ | REPRODUCING _~808_ |
|---|---|---|---|
| AAA.wav | 1:51 | REPRODUCE FROM KEYWORD | REPRODUCE FROM BEGINNING OF FILE |
| BBB.wav | 15:12 | REPRODUCE FROM KEYWORD | REPRODUCE FROM BEGINNING OF FILE |
| CCC.wav | 10:01 | REPRODUCE FROM KEYWORD | REPRODUCE FROM BEGINNING OF FILE |
| BBB.wav | 7:35 | REPRODUCE FROM KEYWORD | REPRODUCE FROM BEGINNING OF FILE |
| DDD.wav | 4:24 | REPRODUCE FROM KEYWORD | REPRODUCE FROM BEGINNING OF FILE |
| EEE.wav | 35:57 | REPRODUCE FROM KEYWORD | REPRODUCE FROM BEGINNING OF FILE |
| AAA.wav | 0:19 | REPRODUCE FROM KEYWORD | REPRODUCE FROM BEGINNING OF FILE |

# FIG. 9

|  | a | b | ... | { | P | l | r | ... | z | <sp> |
|---|---|---|---|---|---|---|---|---|---|---|
| a | 0 | 1 |  | 0 | 1 | 1 | 1 |  | 1 | 1 |
| b | 1 | 0 |  | 1 | 0 | 1 | 1 |  | 1 | 1 |
| ⋮ |  |  |  |  |  |  |  |  | ⋮ | ⋮ |
| { | 0 | 1 |  | 0 | 1 | 1 | 1 |  | 1 | 1 |
| p | 1 | 0 |  | 1 | 0 | 1 | 1 |  | 1 | 1 |
| l | 1 | 1 |  | 1 | 1 | 0 | 1 |  | 1 | 1 |
| r | 1 | 1 |  | 1 | 1 | 1 | 0 |  | 1 | 1 |
| ⋮ |  |  |  |  |  |  |  |  | ⋮ | ⋮ |
| z | 1 | 1 | ... | 1 | 1 | 1 | 1 | ... | 0 | 1 |
| <SP> | 1 | 1 | ... | 1 | 1 | 1 | 1 | ... | 1 | 0 |

# FIG. 10

CHARACTER STRING A    | a  b  c  d  e |

↓ DELETE b

a c d e

↓ SUBSTITUTE d WITH f

a c f e

↓ INSERT g

CHARACTER STRING B    | a c f e g |

# FIG. 11

CHARACTER STRING A     | a <u>b</u> c d e |

↓ DELETE b

a c <u>d</u> e

↓ SUBSTITUTE d WITH f

CHARACTER STRING B     | x y z a c <u>f</u> e g k l m |

# FIG. 12

|   |   | a | b | ··· | { | P | l | r | ··· | z | \<sp> |
|---|---|---|---|---|---|---|---|---|---|---|---|
| a |   | 0 | 1 |   | 0 | 1 | 1 | 1 |   | 1 | 1 |
| b |   | 1 | 0 |   | 1 | 1 | 1 | 1 |   | 1 | 1 |
| ⋮ |   |   |   |   |   |   |   |   |   | ⋮ | ⋮ |
| { |   | 0 | 1 |   | 0 | 1 | 1 | 1 |   | 1 | 1 |
| p |   | 1 | 1 |   | 1 | 0 | 1 | 1 |   | 1 | 1 |
| l |   | 1 | 1 |   | 1 | 1 | 0 | 1 |   | 1 | 1 |
| r |   | 1 | 1 |   | 1 | 1 | 1 | 0 |   | 1 | 1 |
| ⋮ |   |   |   |   |   |   |   |   |   | ⋮ | ⋮ |
| z |   | 1 | 1 | ··· | 1 | 1 | 1 | 1 | ··· | 0 | 1 |
| \<SP> |   | 1 | 1 | ··· | 1 | 1 | 1 | 1 | ··· | 1 | 0 |

# FIG. 13

```
EditDistance(A, B){
        /* INITIALIZE */
        for i in 0, ..., N
        {
            old[i] ← N
            new[i] ← N
        }
        Ed ← N
        old[0] ← 0

        /* CALCULATE EDIT DISTANCE */
        for j in 1, ..., M
        {
            for i in 1, ..., N
            {
                score0 ← old[i-1]+Matrix(A(i), B(j)) /*SUBSTITUTE*/
                score1 ← old[i]+Matrix(SP, B(j))     /*INSERT*/
                score2 ← new[i-1]+Matrix(A(i), SP) /*DELETE*/

                new[i] ← min(score0, score1, score2)
            }

            for i in 0, ..., N
                old[i] ← new[i]

            if Ed > old[N]
                then Ed ← old[N]
        }

        /* RETURN RESULT */
        return Ed;
}
```

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002221984 A
- JP 2005038014 A
- US 20090132251 A1
- US 20030187649 A1

**Non-patent literature cited in the description**

- **KOHEI IWATA et al.** Verification of Effectiveness of New Sub-word Model and Sub-word Acoustic Distance in Vocabulary Free Acoustic Document Retrieving Method. *Information Processing Society of Japan Journal,* 2007, vol. 48 (5
- **TATSUYA KAWAHARA ; TOSHIHIKO MUNETSUGU ; SHUJI DOOSHITA.** Word Spotting in Conversation Voice Using Heuristic Language Model. *Journal of Information & Communication Research, D-II, Information System, II-Information Processing,* 1995, vol. 78 (7), 1013-1020
- **TATSUYA KAWAHARA ; TOSHIHIKO MUNETSUGU ; SHUJI DOOSHITA.** Word Spotting in Conversation Voice Using Heuristic Language Model. *Journal of Information & Communication Research, D-II, Information · System, II-Information Processing,* 1995, vol. 78 (7), 1013-1020